# EUROPEAN PATENT SPECIFICATION

(11) **EP 4 362 206 B1**
(45) Date of publication and mention of the grant of the patent: **18.03.2026**
(21) Application number: 23835891.5
(22) Date of filing: 07.07.2023
(51) Int. Cl.: H01M 50/531, H01M 50/533, H01M 50/105, H01M 50/178, H01M 50/211, H01M 50/249, H01M 50/50, H01M 50/502, H01M 50/507

(54) **BATTERY MODULE AND BATTERY PACK AND VEHICLE INCLUDING THE SAME**
BATTERIEMODUL UND BATTERIEPACK UND FAHRZEUG MIT DIESEM
MODULE DE BATTERIE, BLOC-BATTERIE ET VÉHICULE LES COMPRENANT

(30) Priority: 08.07.2022 KR 20220084491
(43) Date of publication of application: 01.05.2024
(73) Proprietor: LG ENERGY SOLUTION, LTD., Seoul 07335 (KR)
(72) Inventor: JANG, Sung-Hwan, Daejeon 34122 (KR); SEONG, Jun-Yeob, Daejeon 34122 (KR)
(74) Representative: Hoffmann Eitle
(86) International application number: PCT/KR2023/009696
(87) International publication number: WO 2024/010425

(56) References cited:
- EP-A1- 3 916 825
- EP-A2- 2 720 301
- CN-B- 101 140 983
- KR-A- 20210 058 478
- KR-A- 20220 005 221
- KR-B1- 102 035 126
- KR-B1- 102 258 819
- US-A1- 2020 194 768

## Description

### TECHNICAL FIELD

The present disclosure relates to a battery module and a battery pack and a vehicle including the same, and more particularly, to a battery module with improved space utilization and a battery pack and a vehicle including the same.

### BACKGROUND ART

Due to their characteristics of being easily applicable to various products and electrical properties such as high energy density, secondary batteries are widely applied to not only portable devices but also electric vehicles (EVs) or hybrid electric vehicles (HEVs) that are driven by an electrical driving source. Such secondary batteries are gaining attention for their advantages of remarkably reducing the use of fossil fuels and not generating by-products from the use of energy, making it a new source of energy with eco-friendliness and energy efficiency.

The types of secondary batteries widely used at present include lithium ion batteries, lithium polymer batteries, nickel cadmium batteries, nickel hydrogen batteries, nickel zinc batteries or the like. A unit secondary battery cell or a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

When fabricating the battery pack by connecting the plurality of battery cells in series/in parallel, it is general to make a battery module including at least one battery cell, and then fabricate a battery pack using at least one battery module with an addition of any other component.

Meanwhile, in the case of the conventional battery module, a plurality of electrode leads respectively extended from the plurality of battery cells is coupled to each other such that they overlap. Additionally, a busbar for electrical connection of the battery cells is configured to overlap all the overlapping coupled parts of the plurality of electrode leads.

The conventional battery module has low space utilization due to too large width of the busbar.

EP 2 720 301 A2 concerns a battery module. The battery module includes a plurality of battery cells and electrode terminals. The battery cells are electrically connected to a bus bar in a state in which the battery cells are sequentially stacked.

EP 3 916 825 A1 concerns a battery module, battery module manufacturing method and battery pack comprising battery module. The battery module includes a plurality of stacked battery cells. A plurality of electrode leads protrude from a cell terrace and are bent in a direction where a busbar is located, wherein the bent electrode leads overlap with the same busbar.

### DISCLOSURE

### Technical Problem

The present disclosure is designed to solve the above-described problem, and therefore the present disclosure is directed to providing a battery module with improved space utilization and a battery pack and a vehicle including the same.

However, the technical problem to be solved by the present disclosure is not limited to the above-described problems, and these and other problems will be clearly understood by those skilled in the art from the following detailed description.

### Technical Solution

A battery module according to an aspect of the present invention is defined in claim 1 and includes a plurality of battery cells, each including an electrode assembly and a cell case accommodating the electrode assembly, a plurality of electrode leads, each connected to the electrode assembly of each of the plurality of battery cells and extending to a predetermined length from the cell case, and coupled to each other with each end portion overlapping in a sequential order, and a busbar coupled to any one of the overlapping coupled electrode leads.

The plurality of electrode leads include a first lead coupled to the busbar, a second lead coupled to the first lead such that it overlaps a portion of the first lead and a third lead coupled to the second lead such that it overlaps a portion of the second lead, and the first lead does not overlap the third lead. The overlapping part of the first lead and the second lead does not overlap the overlapping part of the second lead and the third lead.

In an embodiment, the busbar may be configured to be coupled to any one of the plurality of electrode leads to prevent overlap with the overlapping coupled part of the plurality of electrode leads.

In an embodiment, the busbar may be configured to be coupled to the electrode lead adjacent to the busbar among the plurality of electrode leads.

In an embodiment, the cell case may include an accommodation portion for accommodating the electrode assembly inside, the accommodation portion may be present on one side of the cell case, and each of the plurality of battery cells may be stacked such that the other side of the cell case, where the accommodation portion is not present, faces the busbar.

In an embodiment, at least two of the plurality of electrode leads may be configured to decrease a bend angle toward the busbar, wherein the bend angle decreases in the order of the third lead, the second lead, and the first lead.

In an embodiment, the plurality of battery cells may be stacked to form a cell assembly, the cell assembly may include a first assembly and a second assembly stacked on the first assembly, and electrode leads of the first assembly, which are coupled to the busbar, and the other electrode leads of the second assembly, which are coupled to the busbar, may be configured to incline towards each other.

In an embodiment, the cell case may include the accommodation portion for accommodating the electrode assembly inside, the accommodation portion may be present on one side of the cell case, and the first assembly and the second assembly may be arranged such that the other side of the cell case of the first assembly, where the accommodation portion is not present, and the other side of the cell case of the second assembly, where the accommodation portion is not present, face each other.

In an embodiment, the plurality of electrode leads may be configured to decrease a length toward the busbar, wherein the first lead coupled to the busbar is shorter than the second lead, and, preferably, additionally the second lead is shorter than the third lead.

Additionally, a battery pack according to another aspect of the present invention is defined in claim 9 and includes at least one battery module according to an aspect of the present invention as described above.

Additionally, a vehicle according to still another aspect of the present invention is defined in claim 10 and includes at least one battery pack according to another aspect of the present invention as described above.

### Advantageous Effects

According to an embodiment of the present disclosure, it may be possible to reduce the size of the busbar electrically connecting the plurality of battery cells, thereby forming an additional space in the battery module. Accordingly, it may be possible to improve space utilization in the battery module.

Additionally, according to an embodiment of the present disclosure, when additional battery cell(s) is mounted in the additional space, it may be possible to improve energy density of the battery module for the same volume.

Additionally, according to an embodiment of the present disclosure, since the size of the busbar reduces, it may be possible to reduce the manufacturing cost and the total weight of the battery module.

Additionally, according to an embodiment of the present disclosure, it may be possible to minimize the number of overlapping coupled electrode leads to the busbar, thereby stably maintaining the coupling at the coupling point between the busbar and the electrode lead.

Additionally, according to an embodiment of the present disclosure, it may be possible to minimize overlap between adjacent electrode leads. Accordingly, it may be possible to stably maintain the coupling at the coupling point between adjacent electrode leads.

Additionally, since overlap between adjacent electrode leads is minimized, it may be possible to minimize stress that may be applied to each electrode lead when coupling adjacent electrode leads. Accordingly, in the structure of the sequentially overlapping coupled electrode leads, the battery module may have no limit in the number of overlapping electrode leads.

By many other embodiments of the present disclosure, many other additional effects may be achieved. These effects of the present disclosure will be described in detail in each embodiment, or regarding the effect that may be easily understood by those skilled in the art, its description is omitted.

### DESCRIPTION OF DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram showing a battery module according to an embodiment of the present disclosure.
FIG. 2 is an enlarged view of a front part of the battery module of FIG. 1.
FIG. 3 is a top view of a front part of the battery module of FIG. 1.
FIG. 4 is a diagram exemplarily showing the arrangement of battery cells in the battery module of FIG. 1.
FIG. 5 is a diagram showing a module case included in the battery module of FIG. 1.
FIG. 6 is a diagram showing some components of a battery module according to a second embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and the illustrations in the accompanying drawings are an exemplary embodiment of the present disclosure to describe the technical aspect of the present disclosure and are not intended to be limiting, and thus it should be understood that a variety of other equivalents and modifications could have been made thereto within the scope of the appended claims at the time that the application was filed.

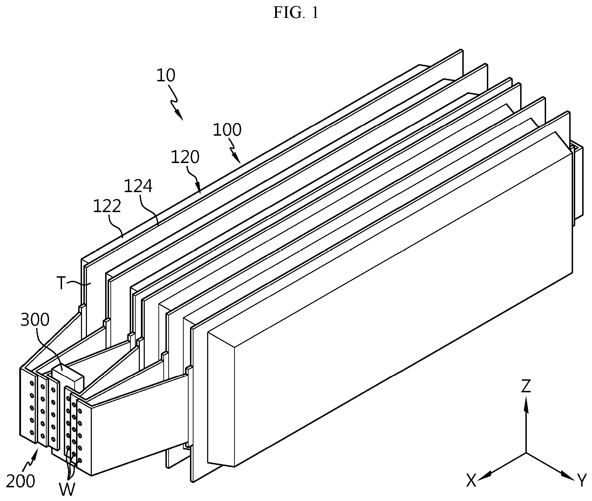

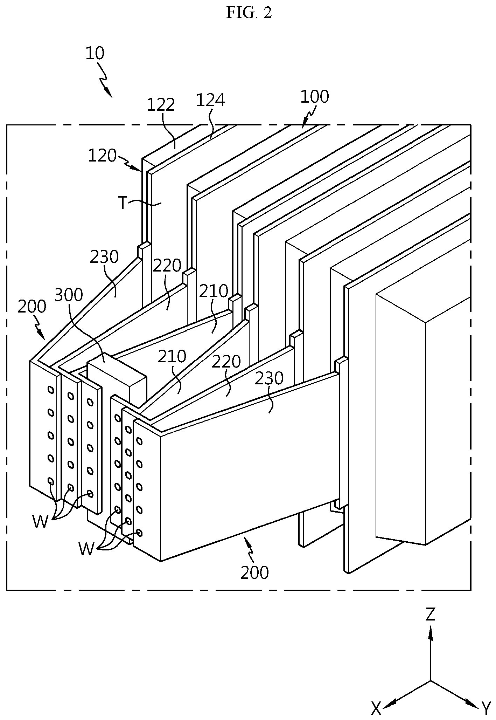

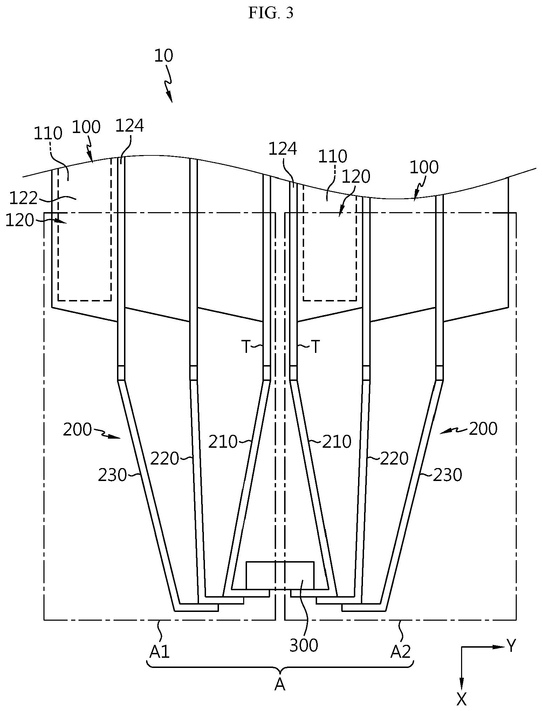

FIG. 1 is a diagram showing a battery module 10 according to an embodiment of the present disclosure, FIG. 2 is an enlarged view of a front part of the battery module 10 of FIG. 1, and FIG. 3 is a top view of the front part of the battery module 10 of FIG. 1. In this instance, a coupling point between electrode leads 200 and a coupling point between the electrode lead 200 and a busbar 300 as descried below in FIG. 2 are indicated by 'W'.

In an embodiment of the present disclosure, the X axis direction shown in the drawing may refer to the front-rear direction of the battery module 10, the Y axis direction may refer to the left-right direction of the battery module 10 perpendicular to the X axis direction on the horizontal plane (XY plane), and the Z axis direction may refer to the up-down direction perpendicular to the X axis direction and the Y axis direction.

Referring to FIGS. 1 to 3, the battery module 10 according to the present invention includes a plurality of battery cells 100, a plurality of electrode leads 200 and a busbar 300.

The plurality of battery cells 100 may be secondary batteries. In an example, the battery cell 100 may be a pouch type battery cell.

The battery cell 100 includes an electrode assembly 110 and a cell case 120.

Although not shown in detail, the electrode assembly 110 may include a first electrode plate having a first polarity, a second electrode plate having a second polarity and a separator interposed between the first electrode plate and the second electrode plate. In an example, the first electrode plate may be a positive electrode plate coated with a positive electrode active material or a negative electrode plate coated with a negative electrode active material, and the second electrode plate may be an electrode plate having the opposite polarity to the first electrode plate.

The cell case 120 accommodates the electrode assembly 110 inside. That is, the cell case 120 may include an accommodation space for accommodating the electrode assembly 110 inside. In this instance, the cell case 120 may accommodate an electrolyte, and the electrode assembly 110 accommodated in the cell case 120 may be impregnated with the electrolyte. In an example, the cell case 120 may be a pouch film including a layer of metal (for example, aluminum (Al)), but is not limited thereto.

The plurality of electrode leads 200 are respectively connected to the electrode assemblies 110 of the plurality of battery cells 100. Additionally, the electrode leads 200 extend to a predetermined length from the cell case 120 and are coupled to each other with the end portions overlapping in a sequential order. In this instance, the plurality of electrode leads 200 may each have a bent end portion and may be coupled to each other with the end portions overlapping in a sequential order.

In an example, the plurality of electrode leads 200 may be coupled by welding (see 'W' in FIG. 2) in a sequential order as shown in FIG. 2. That is, the plurality of electrode leads 200 may each have the bent end portion and may be welded to each other with the end portions overlapping in a sequential order. Although FIGS. 1 and 2 show the welded part W of each electrode lead 200 having a dot or circular shape, the welded parts of the electrode leads 200 may have a linear shape in another embodiment.

The busbar 300 is coupled to any one of the overlapping coupled electrode leads 200. The busbar 300 may electrically connect the plurality of battery cells 100.

In an example, the busbar 300 may be coupled to any one of the plurality of electrode leads 200 by welding (see 'W' in FIG. 2) as shown in FIG. 2. That is, the busbar 300 may be welded to any one of the overlapping coupled electrode leads 200.

In particular, the busbar 300 may be coupled to only one of the sequentially overlapping coupled electrode leads 200.

Since the busbar 300 of the present disclosure is coupled to only one of the electrode leads 200, it may be possible to reduce the size compared to the conventional busbar overlapping coupled to the plurality of electrode leads.

By the above-described exemplary configuration of the present disclosure, it may be possible to reduce the size of the busbar 300 electrically connecting the plurality of battery cells 100, thereby forming an additional space in the battery module 10. Accordingly, it may be possible to improve space utilization in the battery module 10.

Additionally, when additional battery cell(s) 100 is mounted in the additional space, it may be possible to improve energy density of the battery module 10 for the same volume.

Additionally, since the size of the busbar 300 reduces, it may be possible to reduce the manufacturing cost and the total weight of the battery module 10.

Additionally, it may be possible to minimize the number of overlapping coupled electrode leads 200 to the busbar 300, thereby stably maintaining the coupling at the coupling point between the busbar 300 and the electrode lead 200.

Hereinafter, the battery module 10 of the present disclosure will be described in more detail.

Referring to FIGS. 2 and 3, the busbar 300 is configured to be coupled to any one of the plurality of electrode leads 200 to prevent overlap with the overlapping coupled part of the electrode leads 200.

That is, the busbar 300 may not overlap other electrode lead 200 excluding the electrode lead 200 coupled to the busbar 300.

For example, referring to the configuration of FIGS. 2 and 3, the busbar 300 may be directly coupled to a first lead 210 located on the innermost side at the left end portion. In this instance, as shown in FIG. 3, the busbar 300 may not overlap two electrode leads 200 located on the outer side than the first lead 210, i.e., a second lead 220 and a third lead 230 in the front-rear direction (X axis direction).

By the above-described exemplary configuration, it may be possible to further reduce the size of the busbar 300, thereby further improving space utilization in the battery module 10.

Additionally, since the busbar 300 overlaps only the electrode lead 200 coupled to the busbar 300, it may be possible to maintain the coupling at the coupling point between the busbar 300 and the electrode lead 200 more stably.

In particular, the busbar 300 may be configured to be coupled to the electrode lead 200 adjacent to the busbar 300 among the plurality of electrode leads 200.

That is, the busbar 300 does not overlap other electrode lead 200 excluding the electrode lead 200 coupled to the busbar 300, and may be coupled to only the electrode lead 200 adjacent to the busbar 300.

By the above-described exemplary configuration, it may be possible to further reduce the size of the busbar 300, thereby further improving space utilization in the battery module 10.

Referring back to FIGS. 2 and 3, the plurality of electrode leads 200 include the first lead 210, the second lead 220 and the third lead 230.

The first lead 210 is coupled to the busbar 300. In an example, the busbar 300 may be coupled to the first lead 210 by welding (see 'W' in FIG. 2) as shown in FIG. 2.

The second lead 220 is coupled to the first lead 210 such that it overlaps a portion of the first lead 210. In an example, the second lead 220 may be coupled to the first lead 210 by welding (see 'W' in FIG. 2) as shown in FIG. 2.

The third lead 230 is coupled to the second lead 220 such that it overlaps a portion of the second lead 220. In an example, the third lead 230 may be coupled to the second lead 220 by welding (see 'W' in FIG. 2) as shown in FIG. 2.

In this instance, the first lead 210 does not overlap the third lead 230. That is, the overlapping part of the first lead 210 and the second lead 220 does not overlap the overlapping part of the second lead 220 and the third lead 230.

Accordingly, in the overlapping coupling of the plurality of electrode leads 200 in a sequential order, the electrode leads 200 may not overlap in three or more layers.

By the above-described exemplary configuration, it may be possible to minimize overlap between the adjacent electrode leads 200. Accordingly, it may be possible to stably maintain the coupling at the coupling point between the adjacent electrode leads 200.

Additionally, since overlap between the adjacent electrode leads 200 is minimized, it may be possible to minimize stress that may be applied to each electrode lead 200 when coupling the adjacent electrode leads 200. Accordingly, in the structure of overlapping coupling the electrode leads 200 in a sequential order, the battery module 10 may have no limit in the number of overlapping electrode leads 200.

Referring back to FIGS. 2 and 3, the cell case 120 may include an accommodation portion 122 and a sealing portion 124.

The accommodation portion 122 may be configured to accommodate the electrode assembly 110 inside.

The sealing portion 124 may extend to a predetermined length outwards from the periphery of the accommodation portion 122.

Meanwhile, the cell case 120 may include a first case member and a second case member. The peripheral area of each of the first case member and the second case member may be coupled in contact with each other by heat fusion to form the sealing portion 124. Additionally, a space may be formed on the inner side of the sealing portion 124 by a partial gap of the first case member and the second case member, and the space may be the accommodation portion 122. However, the cell case 120 may be integrally formed without dividing into the first case member and the second case member.

Additionally, the sealing portion 124 may include a case terrace T. The case terrace T may refer to an area located in a direction in which the electrode lead 200 extends from the cell case 120 among the entire area of the sealing portion 124.

That is, the case terrace T may extend to a predetermined length from the accommodation portion 122, and may be configured to support the electrode lead 200.

In an embodiment of the present disclosure, the accommodation portion 122 may be present on only one side of the cell case 120. For example, in forming the cell case 120 by sealing the edge of the first case member and the second case member, the first case member may have the accommodation portion 122, and the second case member may not have the accommodation portion 122. In this case, the second case member may have a flat sheet shape.

In a more specific example, referring to the exemplary configuration of FIG. 3, among six battery cells 100 stacked in the left-right direction (Y axis direction), in the case of three battery cells 100 located on the left side, the accommodation portion 122 is present on only the left side. In this case, the left case member has the accommodation portion 122, and the right case member is flat in shape and does not have the accommodation portion 122. Additionally, in the exemplary configuration of FIG. 3, in the case of three battery cells 100 located on the right side, the accommodation portion 122 is present on only the right side. In this case, the right case member has the accommodation portion 122, and the left case member does not have the accommodation portion 122. However, the location of the accommodation portion 122 in the cell case 120 is not limited thereto.

In this instance, each of the plurality of electrode leads 200 may extend from the area close to the side of the cell case 120 where the accommodation portion 122 is not present in each of the plurality of battery cells 100. That is, each of the plurality of electrode leads 200 may extend from the case terrace T of each of the plurality of battery cells 100.

Additionally, each of the plurality of battery cells 100 may be stacked such that the side of the cell case 120 where the accommodation portion 122 is not present faces the busbar 300. That is, each of the plurality of battery cells 100 may be stacked such that the area where the electrode lead 200 extends faces the busbar 300.

For example, in the exemplary configuration of FIG. 3, among the six battery cells 100 stacked in the left-right direction (Y axis direction), the three battery cells 100 located on the left side may be stacked such that the area where the electrode leads 200 extend faces the right side at which the busbar 300 is located. Additionally, the three battery cells 100 located on the right side may be stacked such that the area where the electrode leads 200 extend faces the left side at which the busbar 300 is located.

By the above-described exemplary configuration, it may be possible to form an additional space on the opposite side to the busbar 300 in the plurality of stacked battery cells 100. Accordingly, it may be possible to further improve space utilization in the battery module 10.

Referring to FIGS. 2 and 3, at least two of the plurality of electrode leads 200 may be configured to decrease the bend angle toward the busbar 300.

In an example, among the plurality of electrode leads 200, two electrode leads 200 may have a smaller bend angle toward the busbar 300. Alternatively, all the plurality of electrode leads 200 may have a smaller bend angle toward the busbar 300.

By way of example, in the exemplary configuration of FIG. 3, seeing the bend angle of the electrode leads 200 of the three battery cells 100 located on the left side among the six battery cells 100 stacked in the left-right direction (Y axis direction), the bend angle of the first lead 210 with respect to the busbar 300 may be approximately an acute angle. Additionally, the bend angle of the second lead 220 with respect to the busbar 300 may be approximately a right angle. Additionally, the bend angle of the third lead 230 with respect to the busbar 300 may be approximately an obtuse angle.

Additionally, in the exemplary configuration of FIG. 3, seeing the bend angle of the electrode leads 200 of the three battery cells 100 located on the right side among the six battery cells 100 stacked in the left-right direction (Y axis direction), the bend angle of the first lead 210 with respect to the busbar 300 may be approximately an acute angle. Additionally, the bend angle of the second lead 220 with respect to the busbar 300 may be approximately a right angle. Additionally, the bend angle of the third lead 230 with respect to the busbar 300 may be approximately an obtuse angle.

By the above-described exemplary configuration, it may be possible to further minimize stress that may be applied to each electrode lead 200 when coupling the adjacent electrode leads 200.

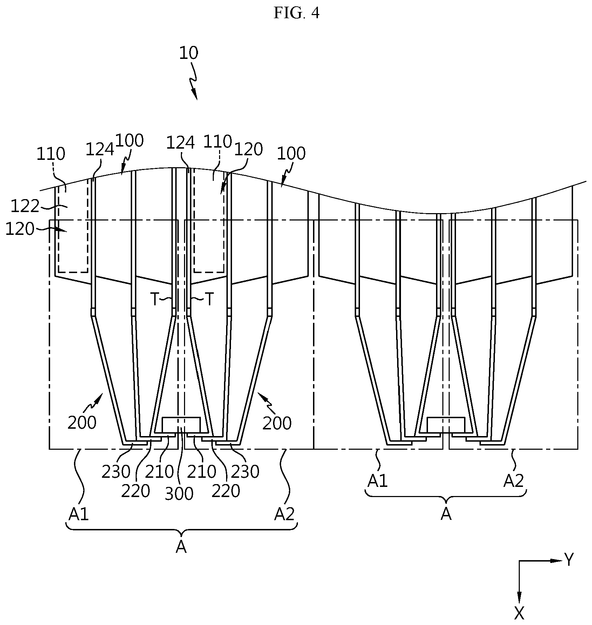

FIG. 4 is a diagram exemplarily showing the arrangement of the battery cells 100 in the battery module 10 of FIG. 1.

Referring to FIGS. 3 and 4, the plurality of battery cells 100 may be stacked to form a cell assembly A.

The cell assembly A may include a first assembly A1 and a second assembly A2. In this instance, the second assembly A2 may be stacked with the first assembly A1.

In this instance, the electrode lead 200 of the first assembly A1 coupled to the busbar 300 and the electrode lead 200 of the second assembly A2 coupled to the busbar 300 may be configured to incline towards each other.

That is, the electrode lead 200 of the first assembly A1 coupled to the busbar 300 and the electrode lead 200 of the second assembly A2 coupled to the busbar 300 may be arranged as close to each other as possible with the busbar 300 interposed therebetween.

Accordingly, it may be possible to reduce the size of the busbar 300 electrically connecting the pair of cell assemblies A, thereby forming an additional space in the battery module.

Referring back to FIGS. 3 and 4, the first assembly A1 and the second assembly A2 may be arranged such that the side of the cell case 120 of the battery cell 100 where the accommodation portion 122 is not present faces each other. In this instance, each of the plurality of electrode leads 200 may extend from the area close to the side of the cell case 120 where the accommodation portion 122 is not present in each of the plurality of battery cells 100. Additionally, each of the plurality of electrode leads 200 may extend from the case terrace T of each of the plurality of battery cells 100.

Specifically, the side of the cell case 120 of the battery cell 100 of the first assembly A1 where the electrode lead 200 coupled to the busbar 300 extends and the side of the cell case 120 of the battery cell 100 of the second assembly A2 where the electrode lead 200 coupled to the busbar 300 extends may be configured to face each other.

By the above-described exemplary configuration, since the sides of the cell cases 120 of the battery cells 100 of the pair of cell assemblies A where the electrode leads 200 coupled to the busbar 300 extends are configured to face each other, it may be possible to further reduce the size of the busbar 300 electrically connecting the pair of cell assemblies A.

Additionally, since the electrode leads 200 of the pair of cell assemblies A coupled to the busbar 300 are also configured to face as close to each other as possible, it may be possible to minimize stress applied to each electrode lead 200 when coupling the busbar 300 to the electrode lead 200 and coupling the adjacent electrode leads 200.

Additionally, it may be possible to minimize stress applied to the case terrace T configured to support the electrode lead 200 when coupling the busbar 300 to the electrode lead 200 and coupling the adjacent electrode leads 200. Accordingly, it may be also possible to minimize stress applied to the cell case 120 when coupling the busbar 300 to the electrode lead 200 and coupling the adjacent electrode leads 200.

Referring back to FIG. 4, by way of example, four cell assemblies A may be stacked. Specifically, the four stacked cell assemblies A may include a pair of first assembly A1-second assembly A2 sets stacked in the left-right direction (Y axis direction) of the battery module 10.

As described above, each of the plurality of electrode leads 200 may extend from the area close to the side of the cell case 120 where the accommodation portion 122 is not present, in each of the plurality of battery cells 100.

Additionally, each of the plurality of battery cells 100 may be stacked such that the side of the cell case 120 where the accommodation portion 122 is not present faces the busbar 300. That is, each of the plurality of battery cells 100 may be stacked such that the area where the electrode lead 200 extends faces the busbar 300.

Accordingly, it may be possible to form an additional space on the opposite side to the busbar 300 in the plurality of stacked battery cells 100.

By the above-described exemplary configuration, in the structure in which a set of the first assembly A1 and the second assembly A2 stacked as shown in FIG. 4 is stacked in pair in the left-right direction of the battery module 10, it may be possible to form an additional space between a set of the first assembly A1 and the second assembly A2 and another set of first assembly A1 and the second assembly A2. Accordingly, it may be possible to further improve space utilization in the battery module 10.

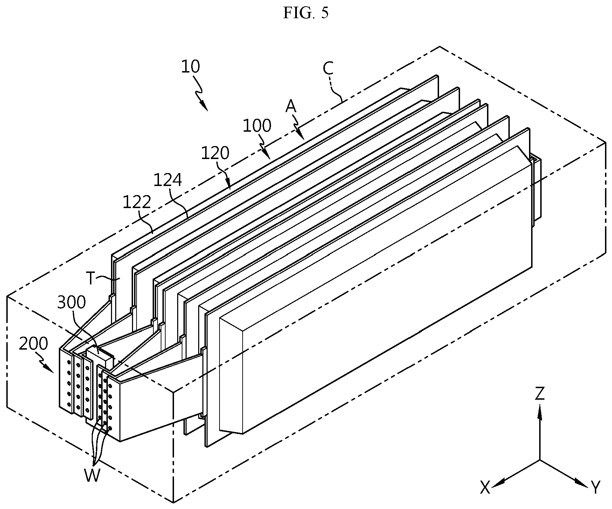

FIG. 5 is a diagram showing a module case C included in the battery module 10 of FIG. 1.

Referring to FIG. 5, the battery module 10 may further include the module case C.

The module case C may accommodate the cell assembly A inside. To this end, the module case C may have an internal accommodation space for accommodating the cell assembly A inside. The module case C may include a material having heat resistance and high strength.

Although not shown in detail, the battery module 10 may further include a module terminal disposed on the front side of the module case C and connected to the cell assembly A. In an example, the module terminal may include a positive module terminal and a negative module terminal. The module terminal may be electrically connected to an electronic control configuration such as a Battery Management System (BMS), a current sensor and a fuse.

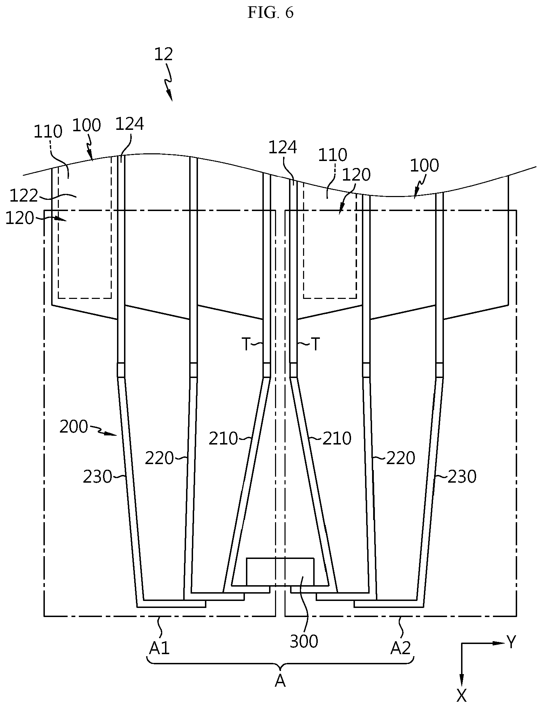

FIG. 6 is a diagram showing some components of the battery module 12 according to a second embodiment of the present disclosure.

The battery module 12 according to this embodiment is similar to the battery module 10 of the previous embodiment, and in describing the components that are substantially identical or similar to the previous embodiment, redundant description is omitted and difference(s) between this embodiment and the previous embodiment will be described below.

Referring to FIG. 6, in the battery module 12, the plurality of electrode leads 200 may be configured to decrease the length toward the busbar 300.

In an example, the plurality of electrode leads 200 may include the first lead 210, the second lead 220 and the third lead 230. Additionally, the first lead 210, the second lead 220 and the third lead 230 may be coupled to one another with each end portion overlapping in a sequential order.

In this instance, the first lead 210 coupled to the busbar 300 may be shorter than the second lead 220. Additionally, the second lead 220 may be shorter than the third lead 230.

In this case, in the overlapping coupling of the first lead 210 coupled to the busbar 300 and the second lead 220, stress applied to the first lead 210 and the second lead 220 may be reduced compared to when the length of the plurality of electrode leads 200 is equal. Additionally, in the overlapping coupling of the second lead 220 not coupled to the busbar 300 and the third lead 230, stress applied to the second lead 220 and the third lead 230 may be also reduced.

By the above-described exemplary configuration, it may be possible to further minimize stress that may be applied to each electrode lead 200 when coupling the adjacent electrode leads 200.

Meanwhile, a battery pack includes at least one battery module 10, 12 according to the present disclosure. That is, the battery pack according to the present invention includes at least one battery module 10, 12 according to the present invention. Additionally, the battery pack may further include a pack case accommodating the battery module 10, 12 and a various types of devices to control the charge/discharge of the battery pack, for example, a BMS, a current sensor and a fuse.

Additionally, the battery pack according to the present disclosure may be applied to a vehicle such as an electric vehicle. That is, the vehicle according to the present invention includes at least one battery pack according to the present invention.

## Claims

1. A battery module (10, 12), comprising:
a plurality of battery cells (100), each including an electrode assembly (110) and a cell case (120) accommodating the electrode assembly (110);
a plurality of electrode leads (200), each connected to the electrode assembly (110) of each of the plurality of battery cells (100) and extending to a predetermined length from the cell case (120), and coupled to each other with each end portion overlapping in a sequential order; and
a busbar (300) coupled to any one of the overlapping coupled electrode leads (200),
wherein the plurality of electrode leads (200) includes:
a first lead (210) coupled to the busbar (300);
a second lead (220) coupled to the first lead (210) such that it overlaps a portion of the first lead (210); and
a third lead (230) coupled to the second lead (220) such that it overlaps a portion of the second lead (220),
**characterized in that** the first lead (210) does not overlap the third lead (230), and
wherein the overlapping part of the first lead (210) and the second lead (220) does not overlap the overlapping part of the second lead (220) and the third lead (230).

2. The battery module (10) according to claim 1, wherein the busbar (300) is configured to be coupled to any one of the plurality of electrode leads (200) to prevent overlap with the overlapping coupled part of the plurality of electrode leads (200).

3. The battery module (10) according to claim 2, wherein the busbar (300) is configured to be coupled to the electrode lead (200) adjacent to the busbar (300) among the plurality of electrode leads (200).

4. The battery module (10) according to claim 1, wherein the cell case (120) includes an accommodation portion (122) for accommodating the electrode assembly (110) inside,
wherein the accommodation portion (122) is present on one side of the cell case (120), and
wherein each of the plurality of battery cells (100) is stacked such that the other side of the cell case (120), where the accommodation portion (122) is not present, faces the busbar (300).

5. The battery module (10) according to claim 1, wherein at least two of the plurality of electrode leads are configured to decrease a bend angle toward the busbar, wherein the bend angle decreases in the order of the third lead (230), the second lead (220), and the first lead (210).

6. The battery module (10) according to claim 1, wherein the plurality of battery cells (100) is stacked to form a cell assembly (A),
wherein the cell assembly (A) includes:
a first assembly (A1); and
a second assembly (A2) stacked on the first assembly (A1), and
wherein electrode leads (200) of the first assembly (A1), which are coupled to the busbar (300), and other electrode leads (200) of the second assembly (A2), which are coupled to the busbar (300), are configured to incline towards each other.

7. The battery module (10) according to claim 6, wherein the cell case (120) includes the accommodation portion (122) for accommodating the electrode assembly (110) inside,
wherein the accommodation portion (122) is present on one side of the cell case (120), and
wherein the first assembly (A1) and the second assembly (A2) are arranged such that the other side of the cell case (120) of the first assembly (A1), where the accommodation portion (122) is not present, and the other side of the cell case (120) of the second assembly (A2), where the accommodation portion (122) is not present, face each other.

8. The battery module (12) according to claim 1, wherein the plurality of electrode leads (200) is configured to decrease a length toward the busbar (300), wherein the first lead (210) coupled to the busbar (300) is shorter than the second lead (220), and, preferably, additionally the second lead (220) is shorter than the third lead (230).

9. A battery pack comprising at least one battery module (10, 12) according to any one of claims 1 to 8.

10. A vehicle comprising at least one battery pack according to claim 9.

## Patentansprüche

1. Batteriemodul (10, 12), umfassend:
eine Vielzahl von Batteriezellen (100), die jeweils eine Elektrodenanordnung (110) und ein Zellgehäuse (120) einschließen, das die Elektrodenanordnung (110) aufnimmt;
eine Vielzahl von Elektrodenanschlussfahnen (200), die jeweils mit der Elektrodenanordnung (110) jeder der Vielzahl von Batteriezellen (100) verbunden sind und sich über eine vorbestimmte Länge vom Zellgehäuse (120) erstrecken, und die untereinander gekoppelt sind, wobei sich jeder Endabschnitt in einer sequentiellen Reihenfolge überlappt; und
eine Sammelschiene (300), die an eine beliebige der überlappend gekoppelten Elektrodenanschlussfahnen (200) gekoppelt ist,
wobei die Vielzahl von Elektrodenanschlussfahnen (200) Folgendes einschließt:
eine erste Anschlussfahne (210), die an die Sammelschiene (300) gekoppelt ist;
eine zweite Anschlussfahne (220), die an die erste Anschlussfahne (210) gekoppelt ist, sodass sie einen Abschnitt der ersten Anschlussfahne (210) überlappt; und
eine dritte Anschlussfahne (230), die an die zweite Anschlussfahne (220) gekoppelt ist, sodass sie einen Abschnitt der zweiten Anschlussfahne (220) überlappt,
**dadurch gekennzeichnet, dass** die erste Anschlussfahne (210) die dritte Anschlussfahne (230) nicht überlappt, und
wobei der Überlappungsabschnitt der ersten Anschlussfahne (210) und der zweiten Anschlussfahne (220) den Überlappungsabschnitt der zweiten Anschlussfahne (220) und der dritten Anschlussfahne (230) nicht überlappt.

2. Batteriemodul (10) nach Anspruch 1, wobei die Sammelschiene (300) dazu konfiguriert ist, an eine beliebige der Vielzahl von Elektrodenanschlussfahnen (200) gekoppelt zu werden, um eine Überlappung mit dem überlappend gekoppelten Abschnitt der Vielzahl von Elektrodenanschlussfahnen (200) zu verhindern.

3. Batteriemodul (10) nach Anspruch 2, wobei die Sammelschiene (300) dazu konfiguriert ist, an die Elektrodenanschlussfahne (200), die unter der Vielzahl von Elektrodenanschlussfahnen (200) angrenzend an die Sammelschiene (300) angeordnet ist, gekoppelt zu werden.

4. Batteriemodul (10) nach Anspruch 1, wobei das Zellgehäuse (120) einen Aufnahmeabschnitt (122) zum Aufnehmen der Elektrodenanordnung (110) im Inneren einschließt,
wobei der Aufnahmeabschnitt (122) auf einer Seite des Zellgehäuses (120) vorhanden ist, und
wobei jede der Vielzahl von Batteriezellen (100) so gestapelt ist, dass die andere Seite des Zellgehäuses (120), an der der Aufnahmeabschnitt (122) nicht vorhanden ist, der Sammelschiene (300) zugewandt ist.

5. Batteriemodul (10) nach Anspruch 1, wobei mindestens zwei der Vielzahl von Elektrodenanschlussfahnen dazu konfiguriert sind, einen Biegewinkel zur Sammelschiene hin zu verringern, wobei der Biegewinkel in der Reihenfolge der dritten Anschlussfahne (230), der zweiten Anschlussfahne (220) und der ersten Anschlussfahne (210) abnimmt.

6. Batteriemodul (10) nach Anspruch 1, wobei die Vielzahl von Batteriezellen (100) gestapelt ist, um eine Zellanordnung (A) zu bilden,
wobei die Zellanordnung (A) Folgendes einschließt:
eine erste Anordnung (A1); und
eine zweite Anordnung (A2), die auf der ersten Anordnung (A1) gestapelt ist, und
wobei Elektrodenanschlussfahnen (200) der ersten Anordnung (A1), die an die Sammelschiene (300) gekoppelt sind, und andere Elektrodenanschlussfahnen (200) der zweiten Anordnung (A2), die an die Sammelschiene (300) gekoppelt sind, dazu konfiguriert sind, zueinander hin geneigt zu sein.

7. Batteriemodul (10) nach Anspruch 6, wobei das Zellgehäuse (120) den Aufnahmeabschnitt (122) zum Aufnehmen der Elektrodenanordnung (110) im Inneren einschließt,
wobei der Aufnahmeabschnitt (122) auf einer Seite des Zellgehäuses (120) vorhanden ist, und
wobei die erste Anordnung (A1) und die zweite Anordnung (A2) so angeordnet sind, dass die andere Seite des Zellgehäuses (120) der ersten Anordnung (A1), an der der Aufnahmeabschnitt (122) nicht vorhanden ist, und die andere Seite des Zellgehäuses (120) der zweiten Anordnung (A2), an der der Aufnahmeabschnitt (122) nicht vorhanden ist, einander zugewandt sind.

8. Batteriemodul (12) nach Anspruch 1, wobei die Vielzahl von Elektrodenanschlussfahnen (200) dazu konfiguriert ist, eine Länge zur Sammelschiene (300) hin zu verringern, wobei die erste Anschlussfahne (210), die an die Sammelschiene (300) gekoppelt ist, kürzer als die zweite Anschlussfahne (220) ist, und, bevorzugt, zusätzlich die zweite Anschlussfahne (220) kürzer als die dritte Anschlussfahne (230) ist.

9. Batteriepack, umfassend mindestens ein Batteriemodul (10, 12) nach einem der Ansprüche 1 bis 8.

10. Fahrzeug, umfassend mindestens ein Batteriepack nach Anspruch 9.

## Revendications

1. Module de batterie (10, 12), comprenant :
une pluralité de cellules de batterie (100), chacune incluant un ensemble d'électrodes (110) et un boîtier de cellule (120) logeant l'ensemble d'électrodes (110) ;
une pluralité de conducteurs d'électrode (200), chacun connecté à l'ensemble d'électrodes (110) de chacune de la pluralité de cellules de batterie (100) et s'étendant sur une longueur prédéterminée à partir du boîtier de cellule (120), et couplées entre elles, avec chaque partie d'extrémité se chevauchant dans un ordre séquentiel ; et
une barre omnibus (300) couplée à l'un quelconque des conducteurs d'électrode (200) couplés se chevauchant,
dans lequel la pluralité de conducteurs d'électrode (200) inclut :
un premier conducteur (210) couplé à la barre omnibus (300) ;
un deuxième conducteur (220) couplé au premier conducteur (210) de telle sorte qu'il chevauche une partie du premier conducteur (210) ; et
un troisième conducteur (230) couplé au deuxième conducteur (220) de telle sorte qu'il chevauche une partie du deuxième conducteur (220),
**caractérisé en ce que** le premier conducteur (210) ne chevauche pas le troisième conducteur (230), et
dans lequel la partie se chevauchant du premier conducteur (210) et du deuxième conducteur (220) ne chevauche pas la partie se chevauchant du deuxième conducteur (220) et du troisième conducteur (230).

2. Module de batterie (10) selon la revendication 1, dans lequel la barre omnibus (300) est configurée pour être couplée à un conducteur quelconque de la pluralité de conducteurs d'électrode (200) afin d'empêcher un chevauchement avec la partie couplée se chevauchant de la pluralité de conducteurs d'électrode (200).

3. Module de batterie (10) selon la revendication 2, dans lequel la barre omnibus (300) est configurée pour être couplée au conducteur d'électrode (200) adjacent à la barre omnibus (300) parmi la pluralité de conducteurs d'électrode (200).

4. Module de batterie (10) selon la revendication 1, dans lequel le boîtier de cellule (120) inclut une partie de logement (122) pour loger l'ensemble d'électrodes (110) à l'intérieur,
dans lequel la partie de logement (122) est présente sur un côté du boîtier de cellule (120), et
dans lequel chacune de la pluralité de cellules de batterie (100) est empilée de telle sorte que l'autre côté du boîtier de cellule (120), où la partie de logement (122) n'est pas présente, fait face à la barre omnibus (300).

5. Module de batterie (10) selon la revendication 1, dans lequel au moins deux de la pluralité de conducteurs d'électrode sont configurés pour diminuer un angle de courbure vers la barre omnibus, dans lequel l'angle de courbure diminue dans l'ordre du troisième conducteur (230), du deuxième conducteur (220) et du premier conducteur (210).

6. Module de batterie (10) selon la revendication 1, dans lequel la pluralité de cellules de batterie (100) est empilée pour former un ensemble de cellules (A),
dans lequel l'ensemble de cellules (A) inclut :
un premier ensemble (A1) ; et
un deuxième ensemble (A2) empilé sur le premier ensemble (A1), et
dans lequel des conducteurs d'électrode (200) du premier ensemble (A1), qui sont couplés à la barre omnibus (300), et d'autres conducteurs d'électrode (200) du deuxième ensemble (A2), qui sont couplés à la barre omnibus (300), sont configurés pour s'incliner les uns vers les autres.

7. Module de batterie (10) selon la revendication 6, dans lequel le boîtier de cellule (120) inclut la partie de logement (122) pour loger l'ensemble d'électrodes (110) à l'intérieur,
dans lequel la partie de logement (122) est présente sur un côté du boîtier de cellule (120), et
dans lequel le premier ensemble (A1) et le deuxième ensemble (A2) sont agencés de telle sorte que l'autre côté du boîtier de cellule (120) du premier ensemble (A1), où la partie de logement (122) n'est pas présente, et l'autre côté du boîtier de cellule (120) du deuxième ensemble (A2), où la partie de logement (122) n'est pas présente, se fassent face.

8. Module de batterie (12) selon la revendication 1, dans lequel la pluralité de conducteurs d'électrode (200) est configurée pour diminuer en longueur vers la barre omnibus (300), dans lequel le premier conducteur (210) couplé à la barre omnibus (300) est plus court que le deuxième conducteur (220), et, de préférence, en outre le deuxième conducteur (220) est plus court que le troisième conducteur (230).

9. Bloc-batterie comprenant au moins un module de batterie (10, 12) selon l'une quelconque des revendications 1 à 8.

10. Véhicule comprenant au moins un bloc-batterie selon la revendication 9.
